(19) Europäisches Patentamt
European Patent Office
Office européen des brevets

(11) **EP 4 140 625 A1**

(12) **EUROPEAN PATENT APPLICATION**
published in accordance with Art. 153(4) EPC

(43) Date of publication:
**01.03.2023 Bulletin 2023/09**

(21) Application number: **20932386.4**

(22) Date of filing: **20.04.2020**

(51) International Patent Classification (IPC):
**B23C 3/00** *(2006.01)*          **B23C 9/00** *(2006.01)*
**B23Q 5/34** *(2006.01)*

(52) Cooperative Patent Classification (CPC):
**B23C 3/00;** B23C 9/00; B23Q 5/34

(86) International application number:
**PCT/CN2020/085591**

(87) International publication number:
**WO 2021/212263 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dalian University Of Technology
Dalian, Liaoning 116024 (CN)**

(72) Inventors:
• **KANG, Renke
Dalian, Liaoning 116024 (CN)**
• **DONG, Zhigang
Dalian, Liaoning 116024 (CN)**
• **YANG, Guolin
Dalian, Liaoning 116024 (CN)**
• **GUO, Dongming
Dalian, Liaoning 116024 (CN)**

(74) Representative: **Proi World Intellectual Property
GmbH
Obermattweg 12
6052 Hergiswil, Kanton Nidwalden (CH)**

(54) **PORTABLE HELICAL MILLING UNIT AND ECCENTRICITY ADJUSTMENT METHOD**

(57) A portable helical milling unit comprises a tool, an eccentric spindle, an outer sleeve, a sleeve housing, and a plurality of transmission mechanisms used to provide power. The eccentric spindle is detachably provided in an output section of the outer sleeve. Each of the eccentric spindle and the outer sleeve has a pre-set eccentricity. The tool is in connection with an eccentricity adjustment mechanism. The outer sleeve is installed in the sleeve housing. The outer sleeve is in connection with a first transmission mechanism and a third transmission mechanism. The eccentric spindle is in connection with a second transmission mechanism. The transmission mechanism has compact structure, light weight, small volume and portability, and can be used under complex working conditions in small spaces. All eccentric spindles have the same shape, can be installed in the outer sleeve and can be quickly replaced, so as to achieve precise and large-range adjustment of the eccentricity, thereby expanding the aperture range of processed holes, and improving processing quality and efficiency. Also provided is an eccentricity adjustment method for the portable helical milling unit.

FIG. 1

## Description

## TECHNICAL FIELD

The present disclosure relates to the technical field of hole machining in assembly of aerospace vehicles, in particular to a portable helical milling unit and an eccentric adjustment method.

## BACKGROUND

Difficult-to-machine materials including composite materials, aluminum alloys, titanium alloys and high-strength steel, as well as different forms of laminated structures composed of at least two materials, are widely used in aerospace vehicles. There are a lot of requirements for hole machining in assembly process of aircraft components. Anew hole machining method is to use a special end mill for helical milling, with a principle that the tool rotates on it axis at a high speed while feeds along the helical path, so that a circular hole with a diameter larger than the tool is machined on the workpiece. For the hole machining of new-type materials including composite materials and titanium alloys, because the axial cutting force of the helical milling is smaller than that of drilling, helical milling is superior to traditional drilling. Helical milling is applied to aircraft assembly instead of traditional drilling to machine some holes with high quality requirements, such as bolt holes and rivet holes. The application scope of helical milling is expanding. The tool needs to feed along the helical path during helical milling whereas the existing hole machining device usually does not have this function. Therefore, it is necessary to develop a special helical milling equipment. However, there are some problems of the current helical milling device: (1) the overall size of the helical milling device is large and heavy, which is not suitable for helical milling under complex space conditions; (2) the helical milling device has complex structure and high cost, which is not suitable for batch manufacturing; (3) the main processing object of the existing helical milling device is small aperture (with a diameter of no more than 20mm) without pre-hole; for the reaming process of the large-diameter intersection hole (with a maximum diameter of more than 28mm) with pre-hole, the processing equipment needs to have greater power and structural stiffness, which increases the design difficulty. Different from traditional drilling, the processing aperture of helical milling not only depends on the diameter of the tool, but also directly relates to the eccentricity of the tool. The processing aperture of the helical milling is equal to the diameter plus twice the eccentricity of the tool. The existing helical milling device usually adopts a dual eccentric sleeve to adjust the eccentricity, and the eccentricities of the inner and outer sleeves cannot be changed. The eccentricity adjustment range has been determined after the device is manufactured. However, regardless of the eccentricity adjustment range, the eccentricity of the tool is changed by changing the relative rotational angle between the inner and outer sleeves during operation, and the eccentricity is changed from the minimum value to the maximum value during the relative rotation by 180 degrees between the inner and outer sleeves. When the eccentricity adjustment range is large, the eccentricity will change greatly if the inner and outer sleeves relatively rotate a small angle. It is difficult to realize a micro eccentricity adjustment so as to affect the eccentricity adjustment accuracy. When the eccentricity adjustment range is small, it is necessary to relatively rotate the inner and outer sleeves a larger angle to change the eccentricity by the same value, which makes it easier to realize the micro eccentricity adjustment and improve the eccentricity adjustment accuracy. However, due to the small eccentricity adjustment range, the aperture range processed by the helical milling device is also reduced accordingly. Therefore, for the eccentricity adjustment method of the existing helical milling device, it is contradictory to improve the eccentricity adjustment accuracy and increase the adjustment range, and it is difficult to achieve both at the same time. The main difficulties of the eccentricity adjustment of the existing helical milling device include that: (1) inaccurate adjustment of eccentricity will result to unqualified machining aperture. In order to process a qualified hole, the helical milling device should adjust the eccentricity to a small enough error with the theoretical value through the eccentricity adjustment mechanism to ensure that the actual machining aperture is qualified. (2) If the variation range of the machining aperture is large, it is necessary to ensure that the eccentricity adjustment range is large enough. Otherwise, during the machining process, tools with different diameters need to be replaced to meet the machining requirements of different apertures, which reduces the machining efficiency and increases the cost. Therefore, the design difficulty of the helical milling device is to ensure that the eccentricity has a large enough adjustment range and a high enough adjustment accuracy.

## SUMMARY OF THE INVENTION

In order to overcome the shortage of existing technology and target to the limitation of helical milling device in the existing technology, the present disclosure provides a portable helical milling unit and an eccentricity adjustment method. The present disclosure adopts the following technical solution:
A portable helical milling unit includes a tool, an eccentric spindle, an outer sleeve, a sleeve housing, and a plurality of transmission mechanisms for providing power. The eccentric spindle is detachably sleeved in an inner hole of output section of the outer sleeve. Each of the eccentric spindle and the outer sleeve has a pre-set eccentricity. The tool is in connection with the output side of the eccentric spindle. The eccentric spindle is detachably connected in the outer sleeve. The outer sleeve is installed in the sleeve housing through a sliding bearing. An input side of the outer sleeve is in connection with a first transmission mechanism and a third transmission mechanism, and an input side of the eccentric spindle is in connection with a second transmission mechanism. The third transmission mechanism is used to drive the outer sleeve to rotate relative to the outer sleeve housing to enable the tool to rotate around an axis of the outer cylindrical surface of the outer sleeve. The first transmission mechanism is used to drive the outer sleeve to move back and forth relative to an axis direction of the sleeve housing to achieve the feed motion of the tool. The second transmission mechanism is used to drive the eccentric spindle to rotate so as to rotate the tool.

Further, as solution M1, when the processing object is a hole having a smaller diameter, the output section of the outer sleeve is an eccentric structure, that is, the axis of the outer cylindrical surface of the outer sleeve has a certain eccentricity $e_0$ with the axis of the inner hole of the output section of the outer sleeve. The middle section and the input section of the outer sleeve are concentric, that is, the axis of the outer cylindrical surface of the outer sleeve is concentric with the axes of the inner holes of the middle section and the input section of the outer sleeve. The eccentric spindle includes a spindle and an inner sleeve having an eccentric structure, that is, the axis of the outer cylindrical surface of the eccentric spindle has a certain eccentricity $e_n$ with the axis of the inner hole of the output section of the outer sleeve, and the spindle is sleeved in the inner hole of the inner sleeve through a spindle bearing.

Further, as solution M2, when the processing object is a hole having a lager diameter, the output section of the outer sleeve is an eccentric structure, that is, the axis of the outer cylindrical surface of the outer sleeve has a certain eccentricity $e_0$ with the axis of the inner hole of the output section of the outer sleeve. The middle section and the input section of the outer sleeve are concentric, that is, the axis of the outer cylindrical surface of the outer sleeve is concentric with the axes of the inner holes of the middle section and the input section of the outer sleeve. The eccentric spindle includes a tool, an inner sleeve, a spindle and an eccentricity adjustment mechanism. The eccentricity adjustment mechanism includes a gear transmission shaft, a rotating shaft, a first gear, and a second gear. The inner sleeve is a concentric structure, and the spindle is sleeved in the inner hole of the inner sleeve through a spindle bearing. The output end of the spindle is installed with the first gear which is meshed with the second gear for transmission. The second gear is installed at the input end of the rotating shaft which is installed on the inner sleeve through a bearing, and the tool is installed at a front end of the rotating shaft. A distance between axes of the first gear and the second gear is $e_n$.

Further, as solution M3, when the processing object is a hole having a lager diameter, the output section of the outer sleeve is an eccentric structure, that is, the axis of the outer cylindrical surface of the outer sleeve has a certain eccentricity $e_0$ with the axis of the inner hole of the output section of the outer sleeve. The middle section and the input section of the outer sleeve are concentric, that is, the axis of the outer cylindrical surface of the outer sleeve is concentric with the axes of the inner holes of the middle section and the input section of the outer sleeve. The eccentric spindle includes a tool, an inner sleeve, a spindle and an eccentricity adjustment mechanism. The eccentricity adjustment mechanism includes a gear transmission shaft, a rotating shaft, a first gear, a second gear, and a third gear. The inner sleeve is a concentric structure, and the spindle is sleeved in the inner hole of the inner sleeve through a spindle bearing. The output end of the spindle is installed with the first gear which is meshed with the third gear for transmission. The third gear is installed on the gear transmission shaft and meshed with the second gear for transmission. The second gear is installed at the input end of the rotating shaft. The rotating shaft is installed on the inner sleeve through a bearing, and the tool is installed at a front end of the rotating shaft. A distance between axes of the first gear and the second gear is $e_n$.

Further, each of the first transmission mechanism, the second transmission mechanism and the third transmission mechanism is in connection with the sleeve housing through a connecting piece.

Further, the first transmission mechanism includes a first motor and a lead screw. The first motor is horizontally installed on the sleeve housing. The output end of the first motor is in connection with the lead screw through a lead screw coupling. One end of the lead screw is installed in a mounting hole of a lead screw support base, and the other end is sleeved in a lead screw nut. The lead screw support base is horizontally installed on the sleeve housing, and the lead screw nut is installed on a translational plate.

The second transmission mechanism includes a second motor and a transmission shaft. The output end of the second motor is in connection with the input end of the transmission shaft, and the output end of the transmission shaft is in connection with the input end of the spindle.

The third transmission mechanism includes a third motor and a first synchronous cog belt, the input end of the outer sleeve is installed with a third synchronous cog belt wheel. The third synchronous cog belt wheel is in connection with a fourth synchronous cog belt wheel installed at the output end of the third motor through the first synchronous cog belt.

The outer side of the input section of the outer sleeve is in connection with the translational plate through a revolution bearing.

Further, the second motor and the third motor are installed on the translational plate. The input end of the transmission shaft is installed with the second synchronous cog belt wheel which is in connection with the first synchronous cog belt wheel installed at the output end of the second motor through the second synchronous cog belt.

In some implementations, the second transmission mechanism further includes an encoder for measuring a rotational speed of the spindle. The encoder is installed at the output end of the second motor or the output end of the transmission shaft. The housing of the encoder is fixed on the translational plate through an encoder support base.

Further, the transmission shaft is installed at the input section of the outer sleeve through a transmission bearing. A circular shaft of the output end of the transmission shaft is in connection with the input end of a universal joint coupling through a key joint, and the output end of the universal joint coupling is in connection with the input end of the spindle.

In some implementations, the helical milling unit further includes an optical shaft. One end of the optical shaft is fixedly installed on the sleeve housing, and the other end is sleeved in a slider of the optical shaft. The slider is installed on the translational plate. The optical shaft is used to maintain the translational plate in a vertical state, i.e., the translational plate can only move in the axis direction of the tool rather than rotate.

Further, an outer side of the output end of the sleeve housing is fixed to the sleeve housing through a flange, and both sides of the sleeve housing are installed with handles.

Further, the universal joint coupling is a double cross-shaft universal joint coupling.

Further, in the solutions M2 and M3, a number of teeth of the first gear is represented as $Z1$, a number of teeth of the second gear is represented as $Z2$, a rotational speed of the spindle is represented as $n1$, and a rotation speed $n2$ of the tool satisfies $n2 = n1 \cdot Z1/Z2$.

It's another object of the present disclosure to provide an eccentricity adjustment method of the portable helical milling unit. For the solution M1, the eccentricity adjustment method includes the following steps of:

S1. Equipping the helical milling unit with an outer sleeve having a constant eccentricity and a plurality of eccentric spindles having different eccentricities, and setting the eccentricity of the outer sleeve as $e_0$ and the eccentricities of the $n$ eccentric spindles as $e_n$ ($e_1, e_2... e_n$), wherein all eccentric spindles have the same boundary dimension and can be installed in the outer sleeve for use;

S2. According to $e_0$ and $e_n$ ($e_1, e_2... e_n$) in step S1, calculating an eccentricity adjustment range of $e_a$ to $e_b$ of the helical milling unit when installing the corresponding eccentric spindle having the eccentricity of $e_n$ ($e_1, e_2... e_n$), and obtaining the eccentricity adjustment ranges corresponding to the $n$ eccentric spindles respectively satisfying $|e_1 - e_0|$ to $|e_1 + e_0|, |e_2 - e_0|$ to $|e_2 + e_0|, ... |e_n - e_0|$ to $|e_n + e_0|$;

S3. according to processing requirements, calculating the eccentricity e to be adjusted by the helical milling unit;

S4. According to the eccentricity e to be adjusted obtained in step S3, selecting the eccentric spindle having the eccentricity e contained in the eccentricity adjustment range of $e_a$ to $e_b$;

S5. Installing the eccentric spindle selected in step S4 on the helical milling unit, and rotating the eccentric spindle to adjust the eccentricity to e;

S6. Completing the eccentricity adjustment;

S7. If it is necessary to continue to adjust the eccentricity, performing steps S3 to S5.

Further, determining the ranges of the eccentricity $e_0$ of the outer sleeve and the eccentricity $e_n$ of the eccentric spindle in step S1 includes the following steps of:

S11. Determining, based on a maximum resolution ratio of a scale of a dial size on a scale ring of the eccentric spindle, a corresponding eccentricity adjustment range value $e_m$ within a maximum measuring range of the scale ring of an eccentric spindle, and determining the eccentricity $e_0$ of the outer sleeve, satisfying $e_0 \leq e_m/2$;

S12. Determining, according to processing requirements including a type and a diameter range of the tool to-be-used and an aperture range of the hole to-be-processed, the eccentricity adjustment range $e_x$ to $e_y$ of the helical milling unit;

S13. Determining a minimum number $n$ of the equipped eccentric spindles that $n = \dfrac{(|e_x - e_y|)}{2e_0}$ ($n$ takes an integer upwards);

S14. Determining, according to the eccentricity adjustment range $e_x$ to $e_y$ determined in step S12 and the number $n$ of the eccentric spindles calculated in step S13, the adjustment eccentricity range $e_a$ to $e_b$ corresponding to the $n$ eccentric spindles satisfying $e_a \sim e_b \in e_x \sim e_y$, that is, $[|e_1 - e_0|, |e_1 + e_0|] \cup [|e_2 - e_0|] \cup \cdots \cup [|e_n - e_0|] \in [e_x, e_y]$;

S15. Determining, according to the eccentricity $e_0$ of the outer sleeve determined in step S11 and the adjustment eccentricity range $e_a$ to $e_b$ corresponding to the $n$ eccentric spindles determined in step S14, i.e., $|e_1 - e_0|$ to $|e_1 + e_0|, |e_2 - e_0|$ to $|e_2 + e_0|, ... |e_n - e_0|$ to $|e_n + e_0|$, the eccentricities of the $n$ eccentric spindles to be $e_n$ ($e_1, e_2... e_n$);

Further, in step S5, rotate the eccentric spindle to produce a relative rotation between it and the outer sleeve to finely adjust the eccentricity. By adjusting the relative rotation angle $\theta$ between the outer sleeve and the eccentric spindle, the eccentricity of the tool relative to the outer cylindrical surface of the outer sleeve is changed so as to obtain different eccentricities of $e = \sqrt{e_0^2 + e_n^2 - 2e_0 e_n \cos(\theta)}$, and the value range of e is $|e_n - e_0| \leq e \leq |e_n + e_0|$.

It's another object of the present disclosure to provide an eccentricity adjustment method of the helical milling unit. For the solution M2, the eccentricity adjustment method has the following steps of: providing the helical milling unit with a plurality of eccentric spindles having different specifications, i.e., the models of the first gear and the second gear of different eccentric spindles are different, which results in different distances $e_n$ between axes of the first gear and the second gear; according to the size of the eccentricity to be adjusted, changing the distance $e_n$ between axes by replacing the eccentric spindles with different specifications to roughly adjust the eccentricity; by rotating the eccentric spindle to enable it to rotate relative to the outer sleeve, adjusting the relative angle $\theta$ between the outer sleeve and the eccentric spindle to finely adjust the eccentricity so as to change the eccentricity $e$ of the tool relative to the outer cylindrical surface of the outer sleeve, obtaining different eccentricities $e$ of the helical milling unit, and

$$e = \sqrt{e_0^2 + e_n^2 - 2e_0 e_n \cos(\theta)}$$, wherein the value range of $e$ is $|e_n - e_0| \le e \le |e_n + e_0|$.

It's another object of the present disclosure to provide an eccentricity adjustment method of the helical milling unit. For the solution M3, the eccentricity adjustment method has the following steps of: providing the helical milling unit with a plurality of eccentric spindles having different specifications, i.e., the models of the first gear, the second gear and the third gear are different, which results in different distances $e_n$ between axes of the first gear and the third gear; according to the size of the eccentricity to be adjusted, changing the distance $e_n$ between axes by replacing the eccentric spindle with different specifications to rough adjust the eccentricity; by rotating the eccentric spindle to enable it to rotate relative to the outer sleeve, adjusting the relative angle $\theta$ between the outer sleeve and the eccentric spindle to finely adjust the eccentricity so as to change the eccentricity $e$ of the tool relative to the outer cylindrical surface of the outer sleeve, obtaining different eccentricities $e$ of the helical milling unit, and $$e = \sqrt{e_0^2 + e_n^2 - 2e_0 e_n \cos(\theta)}$$, wherein the value range of $e$ is $|e_n - e_0| \le e \le |e_n + e_0|$.

The present disclosure has the following advantages:

1. The portable helical milling unit of the present disclosure adopts a sliding bearing to support the outer sleeve, so that the outer sleeve can rotate and move back and forth, which realizes the revolution motion and the axis feed motion. Compared with traditional linear guide rail plus rolling bearing structure, the helical milling unit of the present disclosure has compact structure. The spatial relationship between the first transmission mechanism, the second transmission mechanism and the third transmission mechanism can be effectively coordinated by means of the mechanisms including the translational plate, the synchronous belt and the optical axis, so that the helical milling unit of the present disclosure has compact overall structure, light weight and small volume, which is portable and suitable for operating under complex working conditions in small spaces. The helical milling unit of the present disclosure also has simple structure and low cost.

2. The portable helical milling unit of the present disclosure overcomes shortcomings of the traditional hole machining device and realizes the power transmission between the spindle and the transmission shaft having a certain eccentricity. Due to the structure that the axis of the transmission shaft is concentric with the axis of the outer cylindrical surface of the outer sleeve, the distance between axes of the motor and the transmission shaft is constant, realizing the power input during tool revolution. The helical milling unit has simple structure and low cost, and can ensure the stability of rotational speed and torque transmission.

3. The portable helical milling unit of the present disclosure adopts the form that one outer sleeve is equipped with a plurality of eccentric spindles having different eccentricities, and all eccentric spindles have the same shape. All the eccentric spindles can be installed in the outer sleeve and can be replaced quickly. When any eccentric spindle is installed, the eccentricity adjustable range is small so as to achieve accurate adjustment of eccentricity, while large-scale adjustment of eccentricity can be achieved by replacing the eccentric spindle. The present disclosure overcomes shortcomings of the eccentricity adjustment method of traditional helical milling device, and achieves high-precision adjustment and large-scale adjustment of the eccentricity. The present disclosure expands the aperture range of the processed hole, improves processing quality and efficiency, and reduces processing cost.

Based on the above reasons, the present disclosure can be widely popularized in the field of hole machining technology.

**DETAILED DESCRIPTION OF DRAWINGS**

In order to more clearly illustrate technical solutions in the embodiments of the present disclosure or in the prior art, a brief introduction to the accompanying drawings required for the description of the embodiments or the prior art will be provided below. Obviously, the accompanying drawings in the following description are some of the embodiments of the present disclosure, and those ordinary skilled in the art would also be able to derive other drawings from these drawings without making creative efforts.

Fig. 1 is a cross-sectional schematic diagram of the portable helical milling unit with an eccentric spindle of the solution M1 in the embodiments of the present disclosure.

Fig. 2 is a schematic diagram of the eccentric spindle of the solution M1 in the embodiments of the present disclosure.

Fig. 3 is a schematic diagram of the eccentricity of the solution M1 in the embodiments of the present disclosure.

Fig. 4 is a cross-sectional schematic diagram of the portable helical milling unit with an eccentric spindle of the solution M2 in the embodiments of the present disclosure.

Fig. 5 is a schematic diagram of the eccentric spindle of the solution M2 in the embodiments of the present disclosure, wherein the tool is of a blade shape.

Fig. 6 is a schematic diagram of the eccentric spindle of the solution M2 in the embodiments of the present disclosure, wherein the tool is of a cylindrical shape.

Fig. 7 is a schematic diagram of the eccentricity of the solution M2 in the embodiments of the present disclosure.

Fig. 8 is a cross-sectional schematic diagram of the portable helical milling unit with an eccentric spindle of the solution M3 in the embodiments of the present disclosure.

Fig. 9 is a schematic diagram of the eccentric spindle of the solution M3 in the embodiments of the present disclosure, wherein the tool is of a blade shape.

FIG. 10 is a schematic diagram of the eccentric spindle of the solution M3 in the embodiments of the present disclosure, wherein the tool is of a cylindrical shape.

FIG. 11 is a schematic diagram of the eccentricity of the solution M3 in the embodiments of the present disclosure.

FIG. 12 is a flow diagram of the eccentricity adjustment method for the solution M1 in the embodiments of the present disclosure.

Wherein, 1 - eccentric spindle, 2 - tool, 3 - rotating shaft, 4 - gear transmission shaft, 5 - spindle, 6 - first gear, 7 - second gear, 8 - third gear, 9 - inner sleeve, 10 - spindle bearing, 11 - bearing, 12 - outer sleeve, 13 - sliding bearing, 14 - sleeve housing, 15 - first motor, 16 - lead screw coupling, 17 - lead screw support base, 18 - lead screw, 19 - second motor, 20 - translational plate, 21 - encoder support base, 22 - lead screw nut, 23 - encoder, 24 - first synchronous cog belt wheel, 25 - second synchronous cog belt wheel, 26 - third synchronous cog belt wheel, 27 - fourth synchronous cog belt wheel, 28 - transmission shaft, 29 - transmission bearing, 30 - revolution bearing, 31 - slider of optical axis, 32 - third motor, 33 - optical axis, 34 - handle, 35 - universal joint coupling, 36 - housing, 38 - positioning shaft sleeve.

## DETAILED DESCRIPTION OF PREFERRED EMODIMENTS

To make the objectives, technical solutions and advantages of embodiments of the present disclosure more obvious, the technical solutions of the present disclosure will be clearly and completely described below in conjunction with the accompanying drawings in the embodiments of the present disclosure, and obviously, the described embodiments are some, rather than all of the embodiments of the present disclosure. Based on the embodiments of the present disclosure, all other embodiments acquired by those of ordinary skilled in the art without making creative efforts fall within the scope of protection of the present disclosure.

The present disclosure provides a portable helical milling unit including a tool 2, an eccentric spindle 1, an outer sleeve 12, a sleeve housing 14, and a plurality of transmission mechanisms for providing power. The eccentric spindle 1 is detachably sleeved in an inner hole of output section of the outer sleeve 12. Each of the eccentric spindle 1 and the outer sleeve 12 has a pre-set eccentricity. The tool 2 is in connection with the output side of the eccentric spindle 1. The eccentric spindle 1 is detachably connected in the outer sleeve 12. The outer sleeve 12 is installed in the sleeve housing 14 through a sliding bearing 13. An input side of the outer sleeve 12 is in connection with a first transmission mechanism and a third transmission mechanism, and an input side of the eccentric spindle 1 is in connection with a second transmission mechanism. The third transmission mechanism is used to drive the outer sleeve 12 to rotate relative to the outer sleeve housing 14 to enable the tool 2 to rotate around the axis of the outer cylindrical surface of the outer sleeve 12. The first transmission mechanism is used to drive the outer sleeve 12 to move back and forth relative to the axis direction of the sleeve housing 14 to achieve the feed motion of the tool 2. The second transmission mechanism is used to drive the eccentric spindle 1 to rotate so as to rotate the tool 2.

The output section of the outer sleeve 12 is an eccentric structure, i.e., the axis of the outer cylindrical surface of the outer sleeve has a certain eccentricity $e_0$ with the axis of the inner hole of the output section of the outer sleeve 14. The middle section and the input section of the outer sleeve are concentric, i.e., the axis of the outer cylindrical surface of the outer sleeve is concentric with the axes of the inner holes of the middle section and the input section of the outer sleeve 12.

The structure of the eccentric spindle 1 has three solutions as follows:

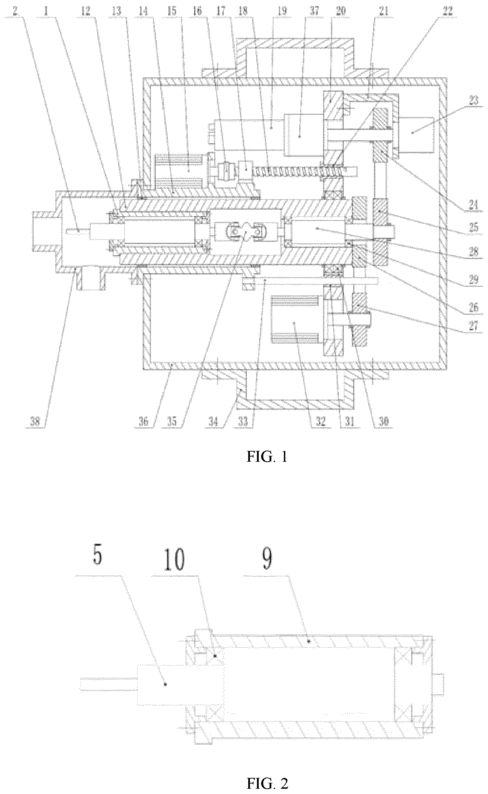

For solution M1 as shown in FIG. 1 and FIG. 2, when the processing object is a hole having a smaller diameter, the eccentric spindle 1 includes a spindle 5 and an inner sleeve 9 having an eccentric structure, that is, the axis of the outer cylindrical surface of the eccentric spindle 1 has a certain eccentricity $e_n$ with the axis of the inner hole, and the spindle 5 is sleeved in the inner hole of the inner sleeve 9 through a spindle bearing 10. The tool 2 is installed at the front end of the spindle 5.

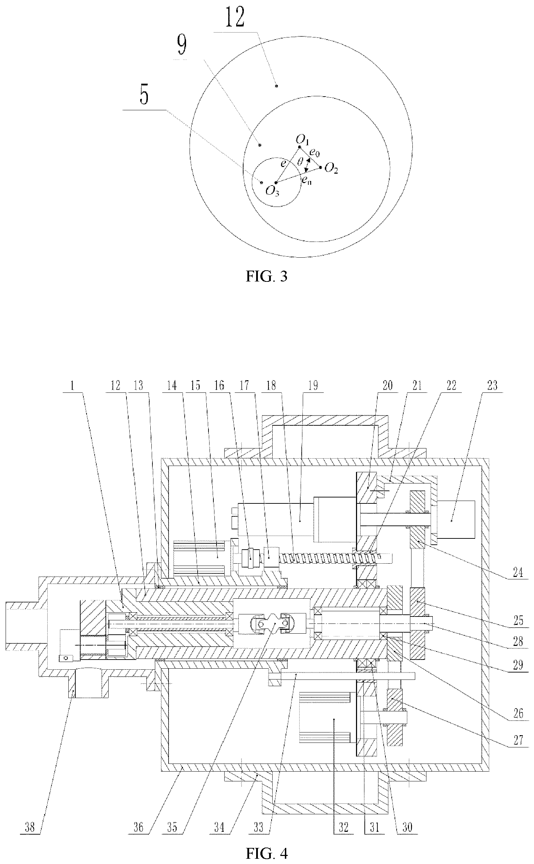

For solution M2 as shown in FIG. 4, when the processing object is a hole having a lager diameter, the eccentric spindle 1 includes a spindle 5, an inner sleeve 9 and an eccentricity adjustment mechanism. The eccentricity adjustment mechanism includes a gear transmission shaft 4, a rotating shaft 3, a first gear 6 and a second gear 7. The inner sleeve 9 is a concentric structure, and the spindle 5 is sleeved in the inner hole of the inner sleeve 9 through a spindle bearing 10. The output end of the spindle 5 is installed with the first gear 6 which is meshed with the second gear 7 for transmission. The second gear 7 is installed at the input end of the rotating shaft 3 which is installed on the inner sleeve 9 through a bearing 11, and the tool 2 is installed at a front end of the rotating shaft 3. A distance between axes of the first gear 6 and the second gear 7 is $e_n$.

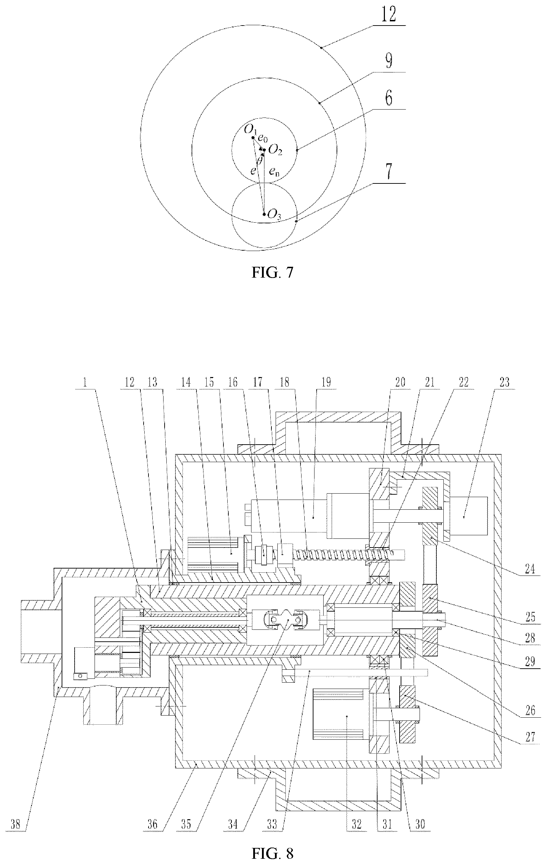

For solution M3 as shown in FIG. 8, when the processing object is a hole having a lager diameter, the eccentric spindle 1 includes an inner sleeve 9, a spindle 5 and an eccentricity adjustment mechanism. The eccentricity adjustment mechanism includes a gear transmission shaft 4, a rotating shaft 3, a first gear 6, a second gear 7 and a third gear 8. The inner sleeve 9 is a concentric structure, and the spindle 5 is sleeved in the inner hole of the inner sleeve 9 through a spindle bearing 10. The output end of the spindle 5 is installed with the first gear 6 which is meshed with the third gear 8 for transmission. The third gear 8 is installed on the gear transmission shaft 4 and meshed with the second gear 7 for transmission. The second gear 7 is installed at the input end of the rotating shaft 3 which is installed on the inner sleeve 9 through a bearing 11, and the tool 2 is installed at a front end of the rotating shaft 3. A distance between axes of the first gear 6 and the second gear 7 is $e_n$.

The first transmission mechanism includes a first motor 15 and a lead screw 18. The first motor 15 is horizontally installed on the sleeve housing 14. The output end of the first motor 15 is in connection with the lead screw 18 through a lead screw coupling 16. One end of the lead screw 18 is installed in a mounting hole of a lead screw support base 17, and the other end is sleeved in a lead screw nut 22. The lead screw support base 17 is horizontally installed on the sleeve housing 14, and the lead screw nut 22 is installed on a translational plate 20.

The second transmission mechanism includes a second motor 19 and a transmission shaft 28. The output end of the second motor 19 is in connection with the input end of the transmission shaft 28, and the output end of the transmission shaft 28 is in connection with the input end of the spindle 5.

The third transmission mechanism includes a third motor 32 and a first synchronous cog belt, the input end of the outer sleeve 12 is installed with a third synchronous cog belt wheel 26. The third synchronous cog belt wheel 26 is in connection with a fourth synchronous cog belt wheel 27 installed at the output end of the third motor 32 through the first synchronous cog belt.

The outer side of the input section of the outer sleeve 12 is in connection with the translational plate 20 through a revolution bearing 30.

The second motor 19 and the third motor 32 are installed on the translational plate 20. The input end of the transmission shaft 28 is installed with the second synchronous cog belt wheel 25 which is in connection with the first synchronous cog belt wheel 24 installed on the output end of the second motor 19 through the second synchronous cog belt.

The second transmission mechanism further includes an encoder 23 for measuring a rotational speed of the spindle 5. The encoder 23 is installed at the output end of the second motor 19 or the output end of the transmission shaft 28. The housing of the encoder 23 is fixed on the translational plate 20 through an encoder support base 21.

The transmission shaft 28 is installed at the input section of the outer sleeve 12 through a transmission bearing 29. A circular shaft of the output end of the transmission shaft 28 is in connection with the input end of a universal joint coupling 35 through a key joint, and the output end of the universal joint coupling 35 is in connection with the input end of the spindle 5. The universal joint coupling 35 is a double cross-shaft universal joint coupling and located in the inner hole of the middle section of the outer sleeve 12. This structure makes the two shafts not on the same axis, and can realize continuous rotation of the two linked shafts in the case of axis offset and reliably transmit torque and motion. The two ends of the universal joint coupling 35 are respectively in connection with the spindle 5 and the transmission shaft 28. The axis of the spindle 5 has a certain eccentricity e with the axis of the outer cylindrical surface of the outer sleeve 12, and the axis of the transmission shaft 28 is concentric with the axis of the outer cylindrical surface of the outer sleeve 12. Therefore, the universal joint coupling 35 can realize the transmission between the spindle 5 with a larger eccentricity and the transmission shaft 28.

The helical filling unit further includes an optical shaft. One end of the optical shaft 33 is fixedly installed on the sleeve housing 14, and the other end is sleeved in a slider of the optical shaft 31. The slider 31 is installed on the translational plate 20. The optical shaft 33 is used to maintain the translational plate 20 in a vertical state, i.e., the translational plate 20 can only move in the axis direction of the tool 2 rather than rotate.

An outer side of the output end of the sleeve housing 14 is fixed to the housing 36 through a flange, and both sides of the housing are installed with handles 34.

The front side of the flange is fixed with a positioning shaft sleeve 38.

The working principle of the revolution motion of the portable helical milling unit is as follows: the third motor 32 drives the outer sleeve 12 to rotate relative to the sleeve housing 14 and the translational plate 20 by the synchronous cog belt wheel and the cog belt, so as to drive the inner sleeve 9 to rotate; when the outer sleeve 12 and the inner sleeve 9 are relatively stationary, the eccentricity e of the tool 2 relative to the outer cylindrical surface of the outer sleeve 12 keeps constant to realize the revolution motion of the tool 2.

The working principle of the feed motion of the portable helical milling unit is as follows: the first motor 15 drives the translational plate 20 to move along the axis direction through the lead screw 18 so as to drive the outer sleeve 12 to move along the axis direction relative to the sleeve housing 14 to realize the axial feed motion of the tool 2.

During the process of the second motor 19 driving the transmission shaft 28 to rotate, the position of the axis of the transmission shaft 28 remains unchanged when the third motor 32 drives the outer sleeve 12 to rotate, which is convenient for the second motor 19 to transmit power to the transmission shaft 28 through the synchronous cog belt wheel.

The working principle of the rotation of the spindle 5 of the portable helical milling unit is as follows:
As for the solution M1, the second motor 19 drives the transmission shaft 28 to rotate through the synchronous cog belt wheel and the cog belt, and the transmission shaft 28 concentric with the outer cylindrical surface of the outer sleeve 12 transmits power to the spindle 5 eccentric with the outer cylindrical surface of the outer sleeve 12 through the universal joint coupling 35, so as to drive the spindle 5 to rotate to realize the rotation of the tool 2. The encoder 23 detects the real-time rotational speed of the tool 2.

As for the solution M2, the second motor 19 drives the transmission shaft 28 to rotate through the synchronous cog belt wheel and the cog belt, and the transmission shaft 28 concentric with the outer cylindrical surface of the outer sleeve 12 transmits power to the spindle 5 eccentric with the outer cylindrical surface of the outer sleeve 12 through the universal joint coupling 35, so as to drive the first gear 6 at the front end of the spindle 5 to rotate, and the first gear 6 drives the second gear 7 to rotate through meshing to realize the rotation of the tool 2 at the front end of the second gear 7. The encoder 23 detects the real-time rotational speed of the spindle 5.

As for the solution M3, the second motor 19 drives the transmission shaft 28 to rotate through the synchronous cog belt wheel and the cog belt, and the transmission shaft 28 concentric with the outer cylindrical surface of the outer sleeve 12 transmits power to the spindle 5 eccentric with the outer cylindrical surface of the outer sleeve 12 through the universal joint coupling 35, so as to drive the first gear 6 at the front end of the spindle 5 to rotate, and the first gear 6 drives the third gear 8 to rotate through meshing and the third gear 8 drives the second gear 7 to rotate through meshing to realize the rotation of the tool 2 at the front end of the second gear 7. The encoder 23 detects the real-time rotational speed of the spindle 5.

The working principle of the eccentricity adjustment of the portable helical milling unit is as follows:
As shown in FIG. 3, as for the solution M1, the eccentricity adjustment method includes that:
The helical milling unit is equipped with a plurality of eccentric spindles 1 having different specifications, i.e., the eccentric spindles 1 have different eccentricities $e_n$ from each other. According to the size of the eccentricity to be adjusted, $e_n$ is changed by replacing the eccentric spindle 1 with different specifications to roughly adjust the eccentricity. The outer circumferential surface of the front end of the eccentric spindle 1 is engraved with an eccentricity adjustment scale ring. Rotate the eccentric spindle 1 to produce a relative rotation between the eccentric spindle 1 and the outer sleeve 12, i.e., to change the relative position of the eccentric spindle 1 and the outer sleeve 12. Adjust the scale ring, i.e., adjust the relative angle $\theta$ between the outer sleeve 12 and the eccentric spindle 1 to finely adjust the eccentricity, so that the eccentricity e of the tool 2 relative to the outer cylindrical surface of the outer sleeve 12 is changed so as to obtain different eccentricities e of the tool 2, $e = \sqrt{e_0^2 + e_n^2 - 2e_0 e_n \cos(\theta)}$, wherein the value range of e is $|e_n - e_0| \le e \le |e_n + e_0|$. After completion of the angle adjustment, the eccentric spindle 1 and the outer sleeve 12 are fixed.

As shown in FIG. 7, as for the solution M2, the eccentricity adjustment method includes that:
The helical milling unit is equipped with a plurality of eccentric spindles 1 having different specifications, i.e., the models of the first gear 6 and the second gear 7 of different eccentric spindles are different, which results in different distances $e_n$ between axes of the first gear 6 and the second gear 7 of different eccentric spindles, i.e., the eccentric spindles 1 have different eccentricities $e_n$ from each other. According to the size of the eccentricity to be adjusted, $e_n$ is changed by replacing the eccentric spindle 1 with different specifications to roughly adjust the eccentricity. The outer circumferential surface of the front end of the eccentric spindle 1 is engraved with an eccentricity adjustment scale ring. Rotate the eccentric spindle 1 to produce a relative rotation between the eccentric spindle 1 and the outer sleeve 12, i.e., to change the relative position of the eccentric spindle 1 and the outer sleeve 12. Adjust the scale ring, i.e., adjust the relative angle $\theta$ between the outer sleeve 12 and the eccentric spindle 1 to finely adjust the eccentricity, so that the eccentricity e of the tool 2 relative to the outer cylindrical surface of the outer sleeve 12 is changed so as to obtain different eccentricities e of the tool 2, $e = \sqrt{e_0^2 + e_n^2 - 2e_0 e_n \cos(\theta)}$, wherein the value range of e is $|e_n - e_0| \le e \le |e_n + e_0|$. After completion of the angle adjustment, the eccentric spindle 1 and the outer sleeve 12 are fixed.

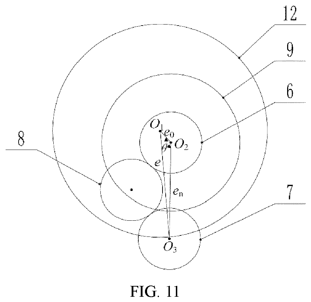

As shown in FIG. 11, as for the solution M3, the eccentricity adjustment method includes that:

The helical milling unit is equipped with a plurality of eccentric spindles 1 having different specifications, i.e., the models of the first gear 6, the second gear 7 and the third gear 8 of different eccentric spindles are different, which results in different distances $e_n$ between axes of the first gear 6 and the second gear 7 of different eccentric spindles, i.e., the eccentric spindles 1 have different eccentricities $e_n$ from each other. According to the size of the eccentricity to be adjusted, $e_n$ is changed by replacing the eccentric spindle 1 with different specifications to roughly adjust the eccentricity. The outer circumferential surface of the front end of the eccentric spindle 1 is engraved with an eccentricity adjustment scale ring. Rotate the eccentric spindle 1 to produce a relative rotation between the eccentric spindle 1 and the outer sleeve 12, i.e., to change the relative position of the eccentric spindle 1 and the outer sleeve 12. Adjust the scale ring, i.e., adjust the relative angle $\theta$ between the outer sleeve 12 and the eccentric spindle 1 to finely adjust the eccentricity, so that the eccentricity $e$ of the tool 2 relative to the outer cylindrical surface of the outer sleeve 12 is changed so as to obtain different eccentricities e of the tool 2,

$$= \sqrt{e_0^2 + e_n^2 - 2e_0 e_n \cos(\theta)}$$ , wherein the value range of $e$ is $|e_n - e_0| \le e \le |e_n + e_0|$. After completion of the angle adjustment, the eccentric spindle 1 and the outer sleeve 12 are fixed.

As for the solutions M2 and M3, the number of teeth of the first gear 6 is represented as Z1, the number of teeth of the second gear 7 is represented as Z2, the rotational speed of the spindle 5 is represented as *n1*, and the rotational speed *n2* of the tool satisfies $n2 = n1 \cdot Z1/Z2$.

As for the solutions M2 and M3, the tool 2 includes two forms as following:

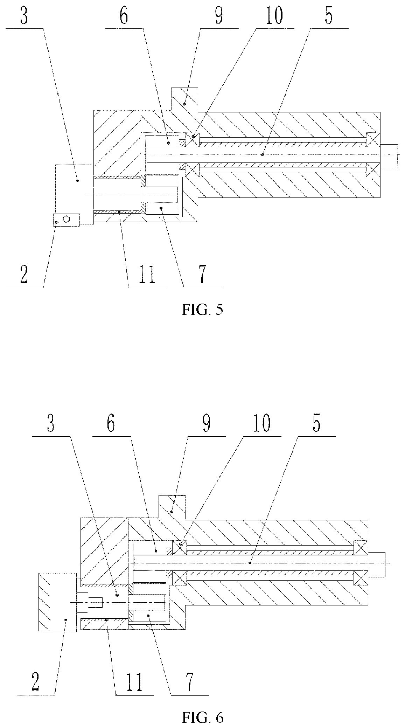

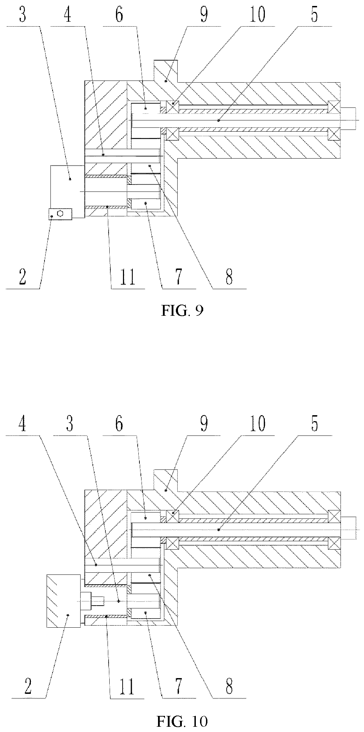

As shown in FIG. 5 and FIG. 9, as for solutions M21 and M31, the tool 2 is of a blade shape and is fixed on the output end of the rotating shaft 3 through bolts.

As shown in FIG. 6 and FIG. 10, as for solutions M22 and M33, the tool 2 is of a cylindrical shape, and the back end of the tool 2 is fixed on the output end of the rotating shaft 3 through a thread connection.

The material of the tool 2 includes but not limited to hard alloy, etc.

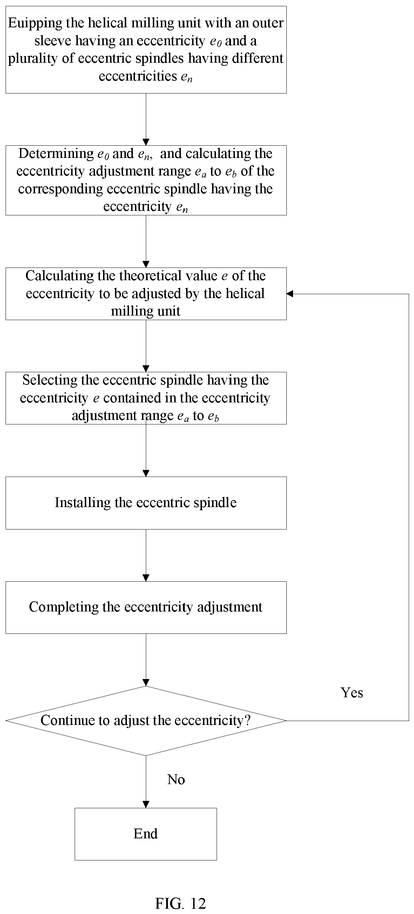

As shown in FIG. 12, as for the solution M1, the eccentricity adjustment method has the following steps:

S1. The helical milling unit is equipped with an outer sleeve 12 having a constant eccentricity and a plurality of eccentric spindles 1 having different eccentricities, and the eccentricity of the outer sleeve 12 is set as $e_0$ and the eccentricities of the $n$ eccentric spindles 1 are set as $e_n$ ($e_1, e_2... e_n$), wherein all eccentric spindles 1 have the same boundary dimension and can be installed in the outer sleeve 12 for use;

S2. According to $e_0$ and $e_n$ ($e_1, e_2... e_n$) in step S1, an eccentricity adjustment range $e_a$ to $e_b$ of the helical milling unit is calculated when the corresponding eccentric spindle having the eccentricity $e_n$ ($e_1, e_2... e_n$) is installed, and the eccentricity adjustment ranges corresponding to the $n$ eccentric spindles are obtained respectively satisfying $|e_1 - e_0|$ *to* $|e_1 + e_0|, |e_2 - e_0|$ *to* $|e_2 + e_0|,...|e_n - e_0|$ *to* $|e_n + e_0|$;

S3. According to processing requirements, the eccentricity $e$ to be adjusted by the helical milling unit is calculated;

S4. According to the eccentricity $e$ to be adjusted obtained in step S3, the eccentric spindle 1 having the eccentricity $e$ contained in the eccentricity adjustment range $e_a$ to $e_b$ is selected;

S5. The eccentric spindle 1 selected in step S4 is installed on the helical milling unit, and the eccentric spindle 1 is rotated to adjust the eccentricity to $e$;

S6. The eccentricity adjustment is conducted;

S7. If it is necessary to continue to adjust the eccentricity, steps S3 to S5 are performed.

Determining the ranges of the eccentricity $e_0$ of the outer sleeve 12 and the eccentricity $e_n$ of the eccentric spindle 1 in step S1 includes the following steps:

S11. Based on a maximum resolution ratio of a scale line of a dial size on a scale ring of the eccentric spindle 1, a corresponding eccentricity adjustment range value $e_m$ within a maximum measuring range of the scale ring of an eccentric spindle 1 is determined, and the eccentricity $e_0$ of the outer sleeve 12 is determined and satisfies $e_0 \le e_m/2$;

S12. According to processing requirements including a type and a diameter range of the tool 2 to-be-used and an aperture range of the hole to-be-processed, the eccentricity adjustment range $e_x$ *to* $e_y$ of the helical milling unit is determined;

S13. A minimum number $n$ of the equipped eccentric spindles 1 is determined that $n = \dfrac{(|e_x - e_y|)}{2e_0}$ ($n$ takes an integer upwards);

S14. According to the eccentricity adjustment range $e_x$ *to* $e_y$ determined in step S12 and the number $n$ of the eccentric spindles 1 calculated in step S13, the adjustment eccentricity range $e_a$ *to* $e_b$ corresponding to the $n$ eccentric spindles 1 is determined and satisfies $e_a \sim e_b \in e_x \sim e_y$,

that is, $[|e_1 - e_0|, |e_1 + e_0|] \cup [|e_2 - e_0|, |e_2 + e_0|] \cup \cdots \cup [|e_n - e_0|, |e_n + e_0|] \in [e_x, e_y]$;

515. According to the eccentricity $e_0$ of the outer sleeve 12 determined in step S11 and the adjustment eccentricity range $e_a$ *to* $e_b$ corresponding to the $n$ eccentric spindles 1 determined in step S14 (i.e., $|e_1 - e_0|$ to $|e_1 + e_0|$ , $|e_2 - e_0|$ to $|e_2 + e_0|$ ,... $|e_n - e_0|$ *to* $|e_n$

+ $e_0$| ), the eccentricities of the $n$ eccentric spindles 1 are determined to be $e_n$ ($e_1$, $e_2$... $e_n$);

The adjustment solutions of M2 and M3 are basically the same as that of M1. As for the solution M2, the eccentricity adjustment method includes the following steps that:

The helical milling unit is equipped with a plurality of eccentric spindles having different specifications, i.e., the models of the first gear and the second gear of different eccentric spindles are different, which results in different distances $e_n$ between axes of the first gear and the second gear. According to the size of the eccentricity to be adjusted, the distance $e_n$ between axes is changed by replacing the eccentric spindle with different specifications to roughly adjust the eccentricity. By rotating the eccentric spindle to enable it to rotate relative to the outer sleeve, the relative angle $\theta$ between the outer sleeve and the eccentric spindle is adjusted to finely adjust the eccentricity so as to change the eccentricity e of the tool relative to the outer cylindrical surface of the outer sleeve, so that different eccentricities of the helical milling unit are obtained to be $e = \sqrt{e_0^2 + e_n^2 - 2e_0 e_n \cos(\theta)}$, and the value range of $e$ is |$e_n$ - $e_0$| $\leq e \leq$ |$e_n$ + $e_0$|.

As for the solution M3, the eccentricity adjustment method includes the following steps that:

The helical milling unit is equipped with a plurality of eccentric spindles having different specifications, i.e., the models of the first gear, the second gear and the third gear are different, which results in different distances $e_n$ between axes of different eccentric spindles. According to the size of the eccentricity to be adjusted, the distance $e_n$ between axes are changed by replacing the eccentric spindle with different specifications to roughly adjust the eccentricity. By rotating the eccentric spindle to enable it to rotate relative to the outer sleeve, the relative angle $\theta$ between the outer sleeve and the eccentric spindle is adjusted to finely adjust the eccentricity so as to change the eccentricity $e$ of the tool relative to the outer cylindrical surface of the outer sleeve, so that different eccentricities of the helical milling unit are obtained to be $e = \sqrt{e_0^2 + e_n^2 - 2e_0 e_n \cos(\theta)}$, and the value range of $e$ is |$e_n$ - $e_0$| $\leq e \leq$ |$e_n$ + $e_0$|.

Taking the solution M1 as an example for helical milling:

In the embodiment, the eccentricity $e_0$ of the outer sleeve 12 of the helical milling unit is 0.5, the milling cutter $\varphi 8$ is used to process the holes $\varphi 10$ and $\varphi 13$. The processing steps are as follows:

S1. Select an outer sleeve 12 having an eccentricity $e_0$ of 0.5 and four eccentric spindles 1 having eccentricities $e_n$ of 0.5, 1.5, 2.5 and 3.5 respectively;
S2. According to $e_0$=0.5 and $e_n$=0.5, 1.5, 2.5 and 3.5 in step S1, the eccentricity adjustment range $e_a$ to $e_b$ of the helical milling unit corresponding to the eccentric spindles 1 having eccentricities $e_n$=0.5, 1.5, 2.5 and 3.5 is calculated, and the corresponding eccentricity adjustment ranges of the 4 eccentric spindles 1 are respectively [0, 1], [1, 2], [2, 3] and [3, 4];
S3. According to the diameter D=$\varphi 10$ of the hole to-be-processed and the diameter d=$\varphi 8$ of the milling cutter 2 to-be-used, the theoretical value of the eccentricity e to be adjusted by the helical milling unit is calculated, i.e., $e$ = (D-d) / 2 = 1;
S4. According to the theoretical value of the eccentricity $e$=1 to be adjusted obtained in step S3, the eccentric spindle 1 having an eccentricity adjustment range $e_{ab}$ = [1, 2] is selected;
S5. The eccentric spindle 1 selected in step S4 is installed on the helical milling unit, and the adjustment eccentricity $e$ is 1;
S6. The workpiece to-be-processed and the milling tool 2 are clamped to helical milling of the hole;
S7. According to the diameter D=$\varphi 13$ of the hole to-be-processed and the diameter d=$\varphi 8$ of the milling cutter 2 to-be-used, the theoretical value of the eccentricity e to be adjusted by the helical milling unit is calculated, i.e., $e$ = (D-D) / 2 = 2.5;
S8. According to the theoretical value of the eccentricity $e$=2.5 to be adjusted obtained in step S7, the eccentric spindle 1 having an eccentricity adjustment range $e_{ab}$ = [2, 3] is selected;
S9. The eccentric spindle 1 selected in step S8 is installed on the helical milling unit, and the adjustment eccentricity $e$ is 2.5;
S10. The workpiece to-be-processed and the milling cutter 2 are clamped to the helical milling unit to helical milling of the hole;
S11. The hole machining is conducted.

At last, it should be noted that the above various embodiments are merely intended to illustrate the technical solution of the present disclosure and not to limit the same; although the present disclosure has been described in detail with reference to the foregoing embodiments, it should be understood by those ordinary skilled in the art that the technical solutions described in the foregoing embodiments can be modified or equivalents can be substituted for some or all of the technical features thereof; and the modification or substitution does not make the essence of the corresponding technical solution deviate from the scope of the technical solution of each embodiment of the present disclosure.

**Claims**

1. A portable helical milling unit comprising a tool, an eccentric spindle, an outer sleeve, a sleeve housing, and a plurality transmission mechanisms for providing power, wherein the eccentric spindle is detachably sleeved in an inner hole of output section of the outer sleeve, each of the eccentric spindle and the outer sleeve both has a pre-set eccentricity, the tool is in connection with an output side of the eccentric spindle, the eccentric spindle is detachably in connection with the outer sleeve, the outer sleeve is installed in the sleeve housing through a sliding bearing, an input side of the outer sleeve is in connection with a first transmission mechanism and a third transmission mechanism, an input side of the eccentric spindle is in connection with a second transmission mechanism, wherein the third transmission mechanism is used to drive the outer sleeve to rotate relative to the outer sleeve housing to enable the tool to rotate around an axis of outer cylindrical surface of the outer sleeve, the first transmission mechanism is used to drive the outer sleeve to move back and forth relative to an axis direction of the sleeve housing to achieve the feed motion of the tool, and the second transmission mechanism is used to drive the eccentric spindle to rotate so as to rotate the tool.

2. The portable helical milling unit according to claim 1, wherein the output section of the outer sleeve is an eccentric structure, that is, an axis of the outer cylindrical surface of the outer sleeve has a certain eccentricity $e_0$ with an axis of the inner hole of the output section of the outer sleeve, and an middle section and an input section of the outer sleeve are concentric, that is, the axis of the outer cylindrical surface of the outer sleeve is concentric with the axis of the inner holes of the middle section and the input section of the outer sleeve, wherein the eccentric spindle comprises a spindle and an inner sleeve having an eccentric structure, that is, the axis of the outer cylindrical surface of the eccentric spindle has a certain eccentricity $e_n$ with the axis of the inner hole of the output section of the outer sleeve, and the spindle is sleeved in the inner hole of the inner sleeve through a spindle bearing.

3. The portable helical milling unit according to claim 1, wherein the output section of the outer sleeve is an eccentric structure, that is, the axis of the outer cylindrical surface of the outer sleeve has a certain eccentricity $e_0$ with the axis of the inner hole of the output section of the outer sleeve, and the middle section and the input section of the outer sleeve are concentric, that is, the axis of the outer cylindrical surface of the outer sleeve is concentric with the axis of the inner holes of the middle section and the input section of the outer sleeve, wherein the eccentric spindle comprises a tool, an inner sleeve, a spindle and an eccentricity adjustment mechanism, wherein eccentricity adjustment mechanism comprises a gear transmission shaft, a rotating shaft, a first gear, and a second gear, wherein the inner sleeve is a concentric structure, the spindle is sleeved in the inner hole of the inner sleeve through a spindle bearing, the output end of the spindle is installed with the first gear which is meshed with the second gear for transmission, the second gear is installed at the input end of the rotating shaft, the rotating shaft is installed on the inner sleeve through a bearing, the tool is installed at a front end of the rotating shaft, and a distance between axes of the first gear and the second gear is $e_n$.

4. The portable helical milling unit according to claim 1, wherein the output section of the outer sleeve is an eccentric structure, that is, the axis of the outer cylindrical surface of the outer sleeve has a certain eccentricity $e_0$ with the axis of the inner hole of the output section inner hole of the outer sleeve, and the middle section and the input section of the outer sleeve are concentric, that is, the axis of the outer cylindrical surface of the outer sleeve is concentric with the axis of the inner holes of the middle section and the input section of the outer sleeve, wherein the eccentric spindle comprises a tool, an inner sleeve, a spindle and an eccentricity adjustment mechanism, wherein eccentricity adjustment mechanism comprises a gear transmission shaft, a rotating shaft, a first gear, a second gear, and a third gear, wherein the inner sleeve is a concentric structure, the spindle is sleeved in the inner hole of the inner sleeve through a spindle bearing, the output end of the spindle is installed with the first gear which is meshed with the third gear for transmission, the third gear is installed at the gear transmission shaft and meshed with the second gear for transmission, the second gear is installed at the input end of the rotating shaft, the rotating shaft is installed on the inner sleeve through a bearing, the tool is installed at a front end of the rotating shaft, and a distance between axes of the first gear and the second gear is $e_n$.

5. The portable helical milling unit according to any claims of 1 to 4, wherein each of the first transmission mechanism, the second transmission mechanism and the third transmission mechanism is in connection with the sleeve housing through a connecting piece.

6. The portable helical milling unit according to claim 5, wherein

the first transmission mechanism comprises a first motor and a lead screw, wherein the first motor is horizontally installed on the sleeve housing, and the output end of the first motor is in connection with the lead screw through a lead screw coupling, wherein one end of the lead screw is installed in a mounting hole of a lead screw support base, and the other end is sleeved in a lead screw nut, wherein the lead screw support base is horizontally installed on the sleeve housing, and the lead screw nut is installed on a translational plate;

the second transmission mechanism comprises a second motor and a transmission shaft, wherein the output end of the second motor is in connection with the input end of the transmission shaft, and the output end of the transmission shaft is in connection with the input end of the spindle;

the third transmission mechanism comprises a third motor and a first synchronous cog belt, and the input end of the outer sleeve is installed with a third synchronous cog belt wheel, wherein the third synchronous cog belt wheel is in connection with a fourth synchronous cog belt wheel installed at the output end of the third motor through the first synchronous cog belt; and

the outer side of the input section of the outer sleeve is in connection with the translational plate through a revolution bearing.

7. The portable helical milling unit according to claim 6, wherein the second motor and the third motor are installed on the translational plate, the input end of the transmission shaft is installed with the second synchronous cog belt wheel which is in connection with the first synchronous cog belt wheel installed on the output end of the second motor through the second synchronous cog belt.

8. The portable helical milling unit according to claim 6, wherein the second transmission mechanism further comprises an encoder for measuring a rotational speed of the spindle, wherein the encoder is installed at the output end of the second motor or the output end of the transmission shaft, and the housing of the encoder is fixed on the translational plate through an encoder support base.

9. The portable helical milling unit according to claim 6, wherein the transmission shaft is installed at the input section of the outer sleeve through a transmission bearing, a circular shaft of the output end of the transmission shaft is in connection with the input end of a universal joint coupling through a key joint, and the output end of the universal joint coupling is in connection with the input end of the spindle.

10. The portable helical milling unit according to claim 6, further comprising an optical shaft, wherein one end of the optical shaft is fixedly installed on the sleeve housing and the other end is sleeved in a slider of the optical shaft slider, the slider of the optical shaft is installed on the translational plate, the optical shaft is used to maintain the translational plate in a vertical state, that is, the translational plate can only move in the axis direction of the tool rather than rotate.

11. The portable helical milling unit according to claim 1, wherein the outer side of the output end of the sleeve housing is fixed to the sleeve housing through a flange, and both sides of the sleeve housing are provided with handles.

12. The portable helical milling unit according to claim 9, wherein the universal joint coupling is a double cross shaft universal joint coupling.

13. The portable helical milling unit according to claim 3 or claim 4, wherein a number of teeth of the first gear is represented as $Z1$, a number of teeth of the second gear is represented as $Z2$, a rotational speed of the spindle is represented as $n1$, and a rotational speed $n2$ of the tool satisfies $n2 = n1 \cdot Z1/Z2$.

14. An eccentricity adjustment method for the portable helical milling unit in claim 2, comprising following steps of:

S1. equipping the helical milling unit with an outer sleeve having a constant eccentricity and a plurality of eccentric spindles having different eccentricities, and setting the eccentricity of the outer sleeve as $e_0$ and the eccentricities of the $n$ eccentric spindles as $e_n$ ($e_1$, $e_2$... $e_n$), wherein all eccentric spindles have the same boundary dimensions and can be installed in the outer sleeve for use;

S2. calculating, according to $e_0$ and $e_n$ ($e_1$, $e_2$... $e_n$) in step S1, an eccentricity adjustment range $e_a$ to $e_b$ of the helical milling unit when installing the corresponding eccentric spindle having the eccentricity of $e_n$ ($e_1$, $e_2$... $e_n$), and obtaining the eccentricity adjustment ranges corresponding to the $n$ eccentric spindles respectively satisfying $|e_1 - e_0|$ to $|e_1 + e_0|$, $|e_2 - e_0|$ to $|e_2 + e_0|$, ... $|e_n - e_0|$ to $|e_n + e_0|$;

S3. calculating, according to processing requirements, the adjustment eccentricity $e$ to be adjusted of the helical milling unit;

S4. selecting, according to the eccentricity $e$ to be adjusted obtained in step S3, the eccentric spindle having the eccentricity $e$ contained in the eccentricity adjustment range $e_a$ to $e_b$;

S5. installing the eccentric spindle selected in step S4 on the helical milling unit, and rotating the eccentric spindle to adjust the eccentricity to $e$;

S6. conducting the eccentricity adjustment; and

S7. if it is necessary to continue to adjust the eccentricity, performing steps S3 to S5.

15. The eccentricity adjustment method according to claim 14, wherein determining ranges of the eccen-

tricity $e_0$ of the outer sleeve and the eccentricity $e_n$ of the eccentric spindle in step S1 comprises the following steps of:

S11. determining, based on a maximum resolution ratio of a scale line of a dial size on a scale ring of the eccentric spindle, a corresponding eccentricity adjustment range value $e_m$ within a maximum measuring range of the scale ring of an eccentric spindle, and determining the eccentricity $e_0$ of the outer sleeve satisfying $e_0 \leq e_m/2$;

S12. determining, according to processing requirements including a type and a diameter range of the tool to-be-used and an aperture range of the hole to-be-processed, an eccentricity adjustment range $e_x$ to $e_y$ of the helical milling unit;

S13. determining a minimum number $n$ of the equipped eccentric spindles satisfying

$$n = \frac{(|e_x - e_y|)}{2e_0}$$ ($n$ takes an integer upwards);

S14. determining, according to the eccentricity adjustment range $e_x$ to $e_y$ determined in step S12 and the number $n$ of the eccentric spindles calculated in step S13, the adjustment eccentricity range $e_a$ to $e_b$ corresponding to the $n$ eccentric spindles satisfying $e_a \sim e_b \in e_x \sim e_y$, that is, $[|e_1 - e_0|, |e_1 + e_0|] \cup [|e_2 - e_0|, |e_2 + e_0|] \cup \cdots \cup [|e_n - e_0|, |e_n + e_0|] \in [e_x, e_y]$; and

S15. determining, according to the eccentricity $e_0$ of the outer sleeve determined in step S11 and the adjustment eccentricity range $e_a$ to $e_b$ corresponding to the $n$ eccentric spindles determined in step S14, that is, $|e_1 - e_0|$ to $|e_1 + e_0|$, $|e_2 - e_0|$ to $|e_2 + e_0|$, ... $|e_n - e_0|$ to $|e_n + e_0|$, the eccentricities of the $n$ eccentric spindles to be $e_n$ ($e_1, e_2... e_n$).

16. The eccentricity adjustment method according to claim 14, wherein in step S5, rotating the eccentric spindle to enable it to rotate relative to the outer sleeve to finely adjust the eccentricity, and by adjusting the relative rotation angle $\theta$ between the outer sleeve and the eccentric spindle, changing the eccentricity of the tool relative to the outer cylindrical surface of the outer sleeve so as to obtain different eccentricities e of the helical milling unit, $e = \sqrt{e_0^2 + e_n^2 - 2e_0 e_n \cos(\theta)}$, wherein the value range of e is $|e_n - e_0| \leq e \leq |e_n + e_0|$.

17. The eccentricity adjustment method of the portable helical milling unit in claim 3 or claim 4, comprising the following steps of: according to the size of the eccentricity to be adjusted, changing the distance $e_n$ between axes by replacing the eccentric spindle with different specifications to roughly adjust eccentricity, wherein the outer circumferential surface of the front end of the eccentric spindle is engraved with an eccentricity adjustment scale ring, by rotating the eccentric spindle to enable it to rotate relative to the outer sleeve, that is, changing the relative position of the outer sleeve and the eccentric spindle, and adjusting the scale ring, that is, adjusting the relative angle $\theta$ between the outer sleeve and the eccentric spindle to finely adjust the eccentricity, thereby changing the eccentricity e of the tool relative to the outer cylindrical surface of the outer sleeve so as to obtain different eccentricities e of the tool to be

$$e = \sqrt{e_0^2 + e_n^2 - 2e_0 e_n \cos(\theta)}$$, wherein the value range of e is $|e_n - e_0| \leq e \leq |e_n + e_0|$; and after completion of the angle adjustment, fixing the eccentric spindle and the outer sleeve.

FIG. 1

FIG. 2

EP 4 140 625 A1

FIG. 3

FIG. 4

FIG. 5

FIG. 6

FIG. 7

FIG. 8

FIG. 9

FIG. 10

FIG. 11

Euipping the helical milling unit with an outer sleeve having an eccentricity $e_0$ and a plurality of eccentric spindles having different eccentricities $e_n$

Determining $e_0$ and $e_n$, and calculating the eccentricity adjustment range $e_a$ to $e_b$ of the corresponding eccentric spindle having the eccentricity $e_n$

Calculating the theoretical value $e$ of the eccentricity to be adjusted by the helical milling unit

Selecting the eccentric spindle having the eccentricity $e$ contained in the eccentricity adjustment range $e_a$ to $e_b$

Installing the eccentric spindle

Completing the eccentricity adjustment

Continue to adjust the eccentricity?

Yes

No

End

FIG. 12

## INTERNATIONAL SEARCH REPORT

| International application No. |
|---|
| **PCT/CN2020/085591** |

**A. CLASSIFICATION OF SUBJECT MATTER**

B23C 3/00(2006.01)i; B23C 9/00(2006.01)n; B23Q 5/34(2006.01)n

According to International Patent Classification (IPC) or to both national classification and IPC

**B. FIELDS SEARCHED**

Minimum documentation searched (classification system followed by classification symbols)

B23C, B23Q

Documentation searched other than minimum documentation to the extent that such documents are included in the fields searched

Electronic data base consulted during the international search (name of data base and, where practicable, search terms used)

CNABS, CNKI: 螺旋, 铣, 偏心, 套筒, 齿轮, 丝杠, 万向节; DWPI, SIPOABS: spiral, mill+, eccentric, sleeve, gear, lead, screw, universal, joint+

**C. DOCUMENTS CONSIDERED TO BE RELEVANT**

| Category* | Citation of document, with indication, where appropriate, of the relevant passages | Relevant to claim No. |
|---|---|---|
| X | CN 103192125 A (DALIAN UNIVERSITY OF TECHNOLOGY) 10 July 2013 (2013-07-10) description, paragraphs 15-28, and figures 1-4 | 1, 11 |
| A | CA 1127428 A (SANCHEZ VELASCO VINCENTE) 13 July 1982 (1982-07-13) entire document | 1-17 |
| A | US 5971678 A (NOVATOR AB) 26 October 1999 (1999-10-26) entire document | 1-17 |
| A | CN 106077774 A (DALIAN UNIVERSITY OF TECHNOLOGY) 09 November 2016 (2016-11-09) entire document | 1-17 |
| A | CN 105033768 A (DALIAN UNIVERSITY OF TECHNOLOGY) 11 November 2015 (2015-11-11) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 December 2020** | **20 February 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2020/085591**

| Patent document cited in search report | | | Publication date (day/month/year) | Patent family member(s) | | | Publication date (day/month/year) |
|---|---|---|---|---|---|---|---|
| CN | 103192125 | A | 10 July 2013 | None | | | |
| CA | 1127428 | A | 13 July 1982 | MX | 150545 | A | 24 May 1984 |
| | | | | ES | 479883 | A1 | 16 January 1980 |
| | | | | CH | 636544 | A5 | 15 June 1983 |
| | | | | NL | 8001841 | A | 28 October 1980 |
| | | | | IT | 1146227 | B | 12 November 1986 |
| | | | | BR | 8002318 | A | 02 December 1980 |
| | | | | AT | 368244 | B | 27 September 1982 |
| | | | | FR | 2454865 | A1 | 21 November 1980 |
| | | | | AR | 220827 | A1 | 28 November 1980 |
| | | | | JP | S55144918 | A | 12 November 1980 |
| | | | | AT | A158480 | A | 15 January 1982 |
| | | | | IT | 8048446 | D0 | 18 April 1980 |
| | | | | GB | 2048135 | A | 10 December 1980 |
| | | | | DE | 3015617 | A1 | 06 November 1980 |
| | | | | FR | 2454865 | B1 | 08 July 1983 |
| | | | | GB | 2048135 | B | 22 December 1982 |
| US | 5971678 | A | 26 October 1999 | DE | 69919874 | D1 | 07 October 2004 |
| | | | | JP | 4620249 | B2 | 26 January 2011 |
| | | | | ES | 2226405 | T3 | 16 March 2005 |
| | | | | AU | 4810199 | A | 20 December 1999 |
| | | | | WO | 9962661 | A1 | 09 December 1999 |
| | | | | JP | 2002516761 | A | 11 June 2002 |
| | | | | DE | 69919874 | T2 | 25 August 2005 |
| | | | | EP | 1102653 | A1 | 30 May 2001 |
| | | | | EP | 1102653 | B1 | 01 September 2004 |
| CN | 106077774 | A | 09 November 2016 | None | | | |
| CN | 105033768 | A | 11 November 2015 | None | | | |

Form PCT/ISA/210 (patent family annex) (January 2015)